# EUROPEAN PATENT APPLICATION

(11) **EP 2 770 194 A1**
(43) Date of publication of application: **27.08.2014**
(21) Application number: 12826771.3
(22) Date of filing: 27.08.2012
(51) Int. Cl.: F03B 13/18

(54) **WAVE-POWER ELECTRICITY GENERATION SYSTEM**

(30) Priority: 02.09.2011 CL 21542011
(71) Applicant: Egaña Castillo, Eduardo Javier, Providencia, Santiago 7500528 (CL)
(72) Inventor: Egaña Castillo, Eduardo Javier, Providencia, Santiago 7500528 (CL)
(74) Representative: Carpintero Lopez, Francisco
(86) International application number: PCT/CL2012/000045
(87) International publication number: WO 2013/029195

(57) **Abstract**

The invention relates to a stand-alone plant for treating waste water using the SBR principle, which uses two tanks, an influent tank (1) and a SBR reactor (2), enabling a significant reduction in size, resulting in low energy consumption, as well as reduced transportation volume when several units are transported, wherein said influent tank (1) and said SBR reactor (2) consist of an outer tank and an inner tank, both in the shape of truncated cones, the inner tank having smaller diameters than the outer tank, wherein the bases of both tanks are concentric, each tank generating two volumes, an inner volume corresponding to the SBR reactor (2) and a volumetric ring on the outside thereof, corresponding to the influent tank (1); the SBR reactor having a duct (7) in the aeration zone, said duct being supported on feet (12), wherein said duct (7) consists of a truncated cone-shaped base (13), a cylinder (14) emerging from the upper part thereof and extending up to the minimum level, and inside which are devices that help prevent coalescence of air bubbles, while at the same time providing a rotational direction to the upflow, thus causing a higher rate of biological oxygen uptake, reducing energy consumption. In the bottom part of the tank, the shape of the lower part of the duct facilitates the suspension of solids, given that the downflow is carried to the edges of the tank as a result of the routing induced by the lower cone of the duct, which also contributes to reducing the energy used in mix (21) aeration.

## Description

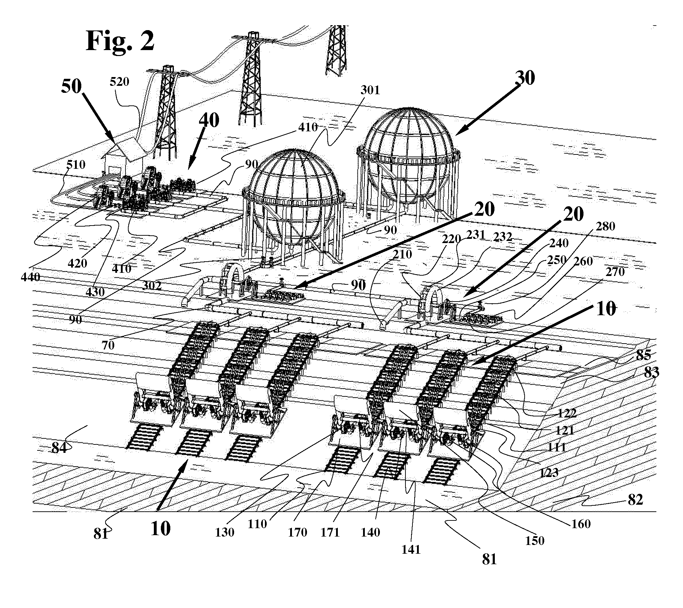

The present invention relates to a system for generating energy from wave power, solve and satisfy global demand for clean energy and renewable energy (fig. 2) its field of application is capturing the kinetic energy of the waves of the surf along the coastline, the second field of application is to use compressed air, the elastic properties of air as a mean of energy storage allowing to achieve to amplify and concentrate the power and to wean the generation of the oceanographic conditions to rescue a constant and controlled flow.

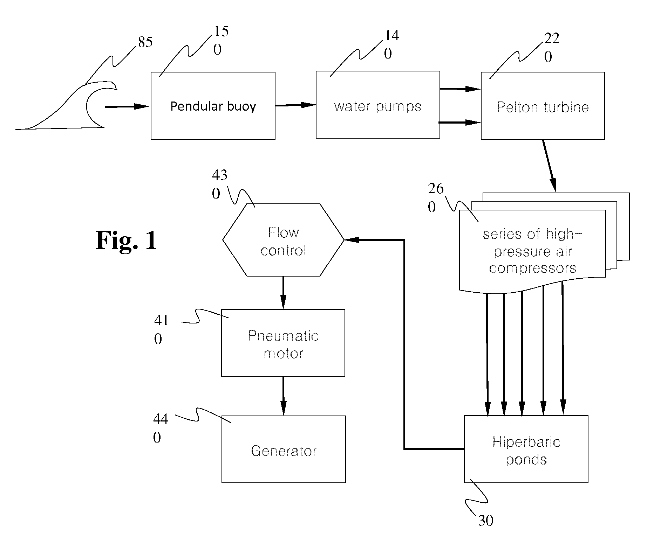

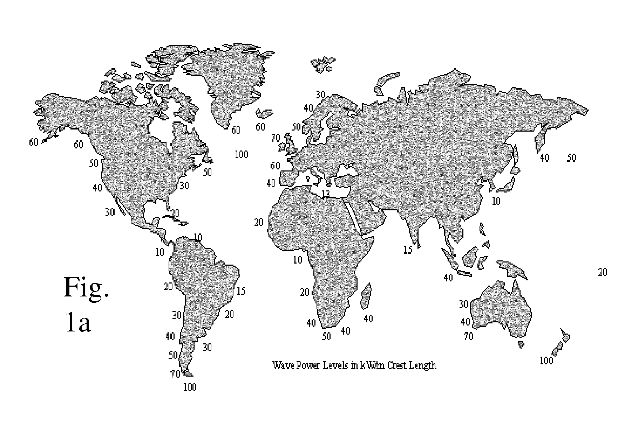

The Non-Conventional Renewable Energies (NCRE) are emerging as a clean, safe and efficient alternative, although costs are not yet competitive due to the limited presence, some examples of the Netherlands with 2MW plants, Portugal with 400 Kw plants, UK with 500Kw, Denmark with 4MW still the existing mechanisms are insufficient, however, the exploitation of own, hydro, wind or geothermal sources for electricity generation, is positioning internationally as a sustainable option, and in the medium and long-term. Several methods exist for exploitation of wave and tidal energy, but still no standardization is achieved because an efficient and cost effective method has not been found. Chile has 4200 KM coastline with favorable conditions for the extraction of wave energy in Fig 1a shows the KW per meter of coastline as global estimates of Topex Poseidon joint project of NASA and CNES.

Currently known systems, present problems of continuity in the delivery of energy by depending directly on climatic and oceanographic variations they are also directly proportional to the wave front because they directly use the potential energy of the movement , another variable is the cost of investment.

The following patents use various methods to rescue the wave energy U.S. Patent 7,755,224 B2 [CIP H02K35/02], use deep waves, therefore, the recovered energy is only a vertical movement which is inefficient uses only horizontal oscillation by the difference between the valley and the crest of the wave.

U.S. Patent 2010/0230965 A1 [IPC: F03B 13/14 F03D9/00], system and method of power generation using a combination of wind and water energy, the problem lies in that the continuity and energy release depends directly on the existence both elements

U.S. Patent 2003/0110767 A1 [IPC F03C 1/00] Method and installation of electrical generator by ocean waves, the main problem is the elasticity of the main stem because it absorbs a lot of energy, to make it more efficient requires very large waves, the second problem lies in that continuity and energy release, depends directly on waves existence conditions.

Patent ES 2356719 (T3) or U.S. 2008231054 (A1) [CIP E02B9/08, F03B13/06, F03B13/12] The system operates by movement of floats connected to the horizontal arms. These arms move the hydraulic pumps to inject water into a hyperbaric chamber. This chamber delivers water through an outlet control valve. This system has two problems, the elastic compression of a liquid is less than that of air, also in the hyperbaric chamber using seawater will require more maintenances to remove micro organisms in our model by using air, require less maintenance. The Capture of the waves as you use long arm to catch the waves the torque is dissipated by arm elasticity also requires larger waves.

Attached list of patents granted or applied referred to the obtain of the wave energy

Patent U.S. 2002/0155767 A1 [CIP: B63B 22/00], method of electrical generation by buoy motion. Patent US005027000 [CIP: F03B13/24], method and power generation system using sea waves. Patent US006109863A [IPC: F03B 15/06], submersible power generation system and associated methods. Patent US006756695B2 [CIP: F03 13/10] Method and system for wave energy conversion using float or buoy. U.S. Patent 007554215B1 [IPC: F03B 13/10 F03B 13/12] generator and method for generating electricity from subsurface currents.

Other patent references US 007453165B2; 520090243293; US 20060232074A1, US 20050121915, US 20080018114, US 20100283249, US 20090165454A1; US 007579705B1; US 20080053084A1; US 007845880B2; US 004851704; US 007915750B1; US 007557456B2; US 20050279085A1, US 20100207392A1; MX 2010011157 (A); AR 229752 (A1); GTP 119868615 (A); CR 2451 (A1); ES 2354899 (A1); CL 12372008 (A); ES 2356719 (T3); ES 2224832 (A1); ES 2224832 (A1); BR 9205901 (A), U.S. 7566983 (B1)

### THE STATE OF THE ART ON PNEUMATIC MOTORS

Pneumatic motors develop more power relative to their size than most other types of engines and they don't get damaged even when blocked by overloading regardless of the time they are locked. When the load drops to its normal value, the engine returns to normal operation; startup, stop and change direction of rotation are instant, the speed control is infinitely variable, just with a valve mounted to the engine inlet, varying the working pressure.

Pneumatic piston engines have 4 to 6 cylinders. Power is developed under the influence of pressure enclosed in each cylinder, they work at lower engine revolutions than vane motors, they have a high starting torque and good speed control they are used to work at low speed with heavy loads; may have axially or radially arranged pistons, in the following we attach patents of internal combustion radial engines that are susceptible to pneumatic adaptation.

U.S. PATENT 1931401 [cip: F02B 75/22], U.S. PATENT 5,297,448 [cip: F16H 25/14], U.S. PATENT 2003/0183071 [cip: F01L 21/2], U.S. PATENT 2006/0260465 A1 [cip: F16J 15/18] U.S. PATENT 2004/0231504 A1 [cip: F01B 13/00]

### PROPERTIES OF WAVES TO EXPLODE

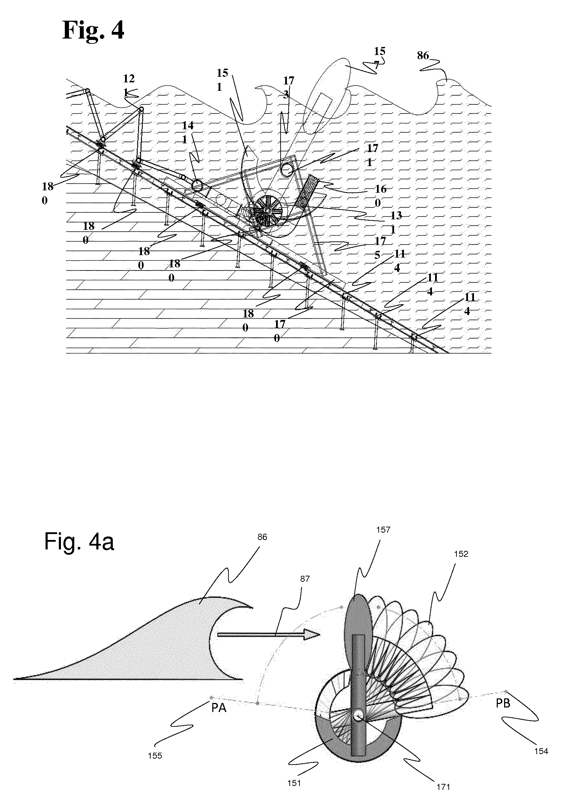

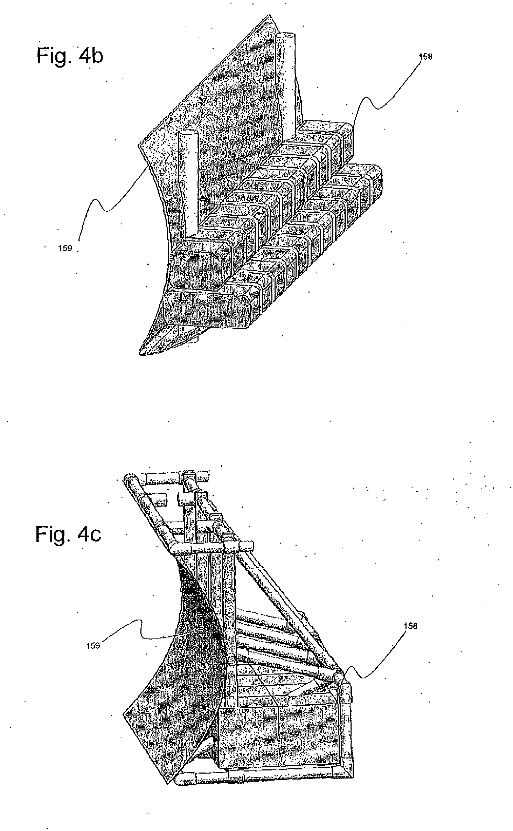

The present invention utilizes the waves crashing in the surf (Fig. 4a, 4b, 4c), translational waves 86 Collapsing or collapse type, Scroll or Plunging type, when a wave of oscillation approaches a coast where the sea has little depth, the lower portion found resistance in the bottom, while the ridge is propelled forward at high speed, causing a reduction in the length of the wave and an increase in its height causing a horizontal displacement 87, when the top of the wave is not able to complete the wave, it collapses and breaks on the coast giving rise to the breakers moving towards the beach shore as a block or wall of water 86.

### DESCRIPTION OF THE DRAWINGS

FIG 1 Flow chart of the model of the electric power generator system from wave energy.
FIG 1a Drawing indicates the kilowatts per linear meter of coastline, image developed by TW Thorpe,
FIG 2 Power generating plant located on the waterfront.
FIG 3 System overview of wave capture platform 170 and anchoring structure on the seabed.
FIG 4 Side View of the system platform wave capture and anchoring structure on the seabed, indicating location based on sea level and the adaptation to the slope of the coast.
Fig 4a Scheme of motion capturing the wave by the pendular buoy.
FIG 4b Impact palette with concave face and floats L.
FIG 5 detailed view of the WAVE system 10.
FIG 6a Isometric view of the truck-sled 180.
FIG 6b Bottom view of 6b truck-sled 180.
FIG 6c Section View b-b 'truck-sled 180.
FIG 6d View of the truck-sled 180 mounted on the "H" 128 profile rail.
FIG 7 Isometric view of the pressurized box with cut.
FIG 8 front isometric view AIR system 20.
FIG 9 rear isometric view AIR system 20.
FIG 10 Isometric view of the flywheel 240 variable load.
FIG 11 Partial isometric view and detailed view of the AIR system 20.
FIG 12 Isometric detail view of gearboxes.
FIG 13 Side view of hyperbaric large storage volume 30.
FIG 14 Isometric view of the MOTOR-GENERATOR system 40.
FIG 15 Isometric detail view of the pneumatic motor 410.
FIG 16a Side view of the pneumatic motor 410.
FIG 17 Section View of A-A' pneumatic motor.

### DESCRIPTION OF THE INVENTION

The invention improves and / or resolves three aspects for the efficiency in generating electric power from wave energy, these aspects are: Continuity, Energy storage and power amplification.

The pneumatic energy storage mitigates the oceanographic and climatic variations that affect the behavior of the waves and also can amplify or concentrate power for a greater power generation.

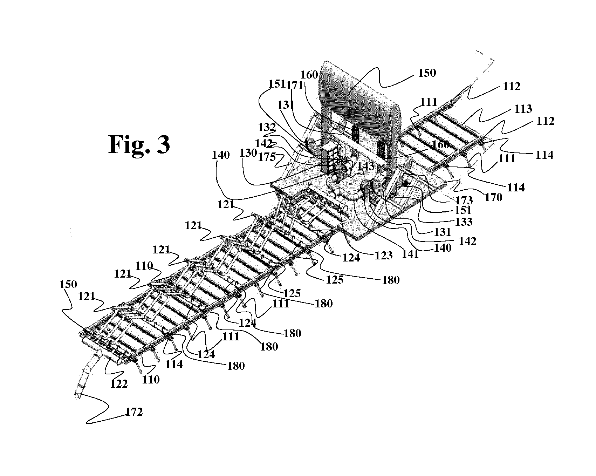

The invention is an electric power generating system (Fig.1) from wave energy, it consists of a successive energy conversions, starts with the WAVE system 10 (Fig. 3) capturing kinetic energy of the wave that is transformed into hydraulic energy by submersible water pumps 140, is conducted to the surface via articulated steel pipelines 121, the hydraulic force drives the second AIR system 20 consisting of a Pelton 220 turbine and air compressor 260, compressed air is transformed into pneumatic energy and is driven by pneumatic steel pipes 90, to the storage tanks which are hyperbaric large volume tanks 30, pneumatic energy 3 is conducted by pneumatic steel pipes 90 to third MOTOR-GENERATOR system 40 consisting of pneumatic motors 410 and generators 440, restriction valve 430 allows to regulate the workflow and the power to maintain a constant speed of pneumatic motors 401. The pneumatic motors transfer its mechanical energy through a gear box 420 to the generators 440, the energy of the generators 440 is transmitted to the power house 50.

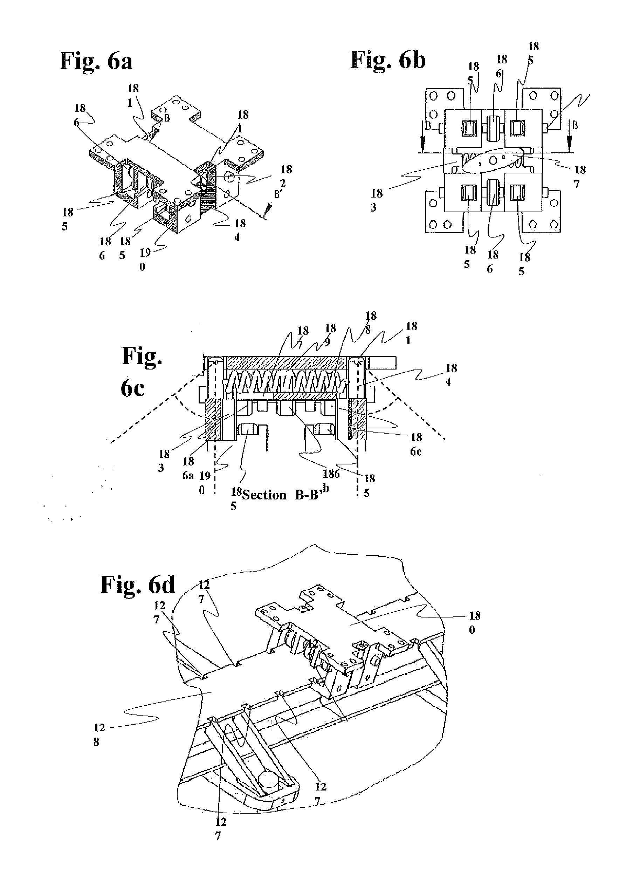

WAVE system 10 (Fig. 3) consists of two sets of elements, the bottom anchoring structure 110 and the wave capturing platform 170 they are joined by a truck-sled 180 with wheels and brake for free displacement between both components. The anchor plate 110 is formed by two structural steel beams of "H" type 112 connected by steel girders traversed 113 distributed equidistantly to maintain the rigid structure to the anchoring platform on either side of the structure 110 was incorporated one series of steel supports 114 of variable angle for bottom supports 111 of variable height that allows to adapt to the bottom irregularities and beach slope (fig. 4). On both sides of the upper face of the structure beam "H" type 112 (Fig. 6d), a series of rounded corners square slots 127 were incorporated where the flange of the brake 183 of the sled carriage 180 is introduced. (Fig.6b), the free travel of the wave capturing platform 170 allows maintaining partially submerged the buoy 157 being adjusted to tidal variations.

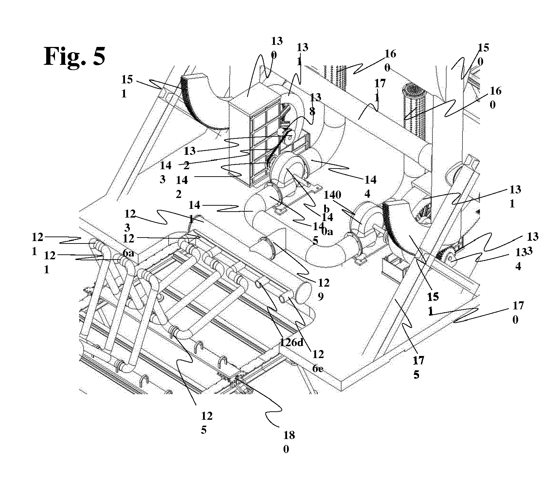

Waves capturer (fig. 5), is composed of solid platform 170, which supports the structure of the profiles 175, which in turn supports the bushings 173 of the buoy axle 171 where causes torque the pendular buoy 150 , the pendular buoy 150 has two ends, (Fig. 4), has a semi gearwheel 151 (fig 5) that pulls the outer gear 133 of the pressurized box flywheel housing 130, at the opposite end (Fig. 4a, 4b, 4c), the buoy 157 steel structure elliptical hollow cylindrical body, its elliptical side face projecting horizontally about four meters wide, Alternative buoy (Fig. 4b, 4c) comprises vane-impact made of a concave rectangular steel plate 159 that at its base grouped individual midsize floats cluster 158, by the converses face of the steel plate 159, the structure in Fig 4b has two hollow columns that are coupled to the pillars of the crown 151..

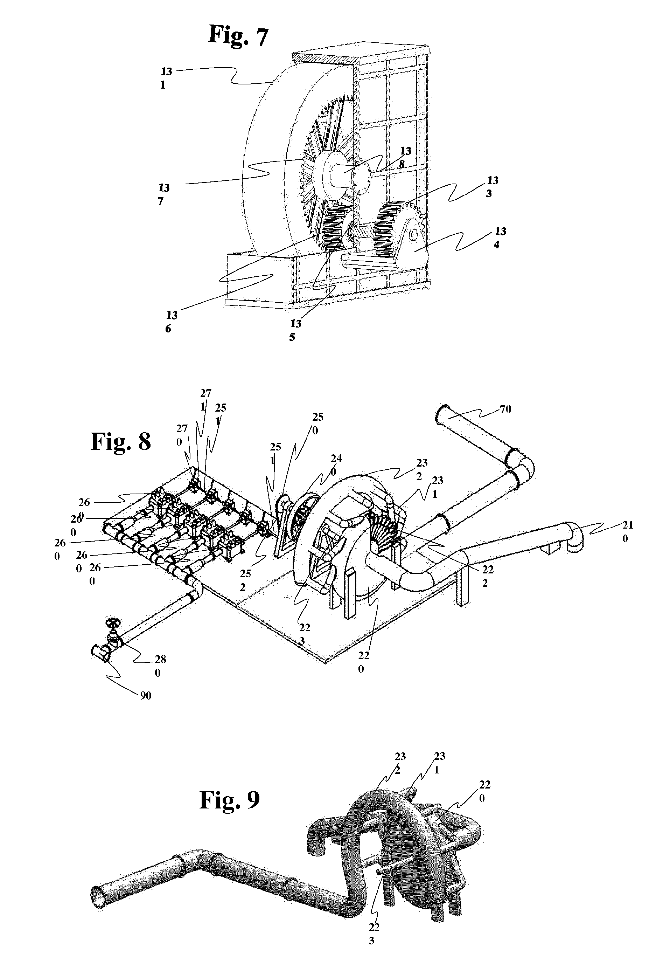

The pressurized flywheel housing 130 (Fig. 7) transmits rotation into an internal gear 136 by a shaft having two unidirectional bearings 135, ratchet type, which rotates by the mechanical strength of the external gear 133 in only one sense, direction of wave 87 (fig. 4a) and then the pendular buoy 150 by weight returns free to its normal position awaiting the next wave, by the torque in the axis 171.

Internal gear 136 (fig. 7) moves the flywheel 131 by a row of gear teeth 137 arranged on the inner side of the flywheel 131. Flywheel shaft 138 (Fig. 5) emerge outside the pressurized housing 130, with a pulley 132, to transmit mechanical power to the pendular submersible pump 140 through a drive belt 143.

In the entry of the submersible water pump 140 a particulate filter 160 is connected to the output of submersible water pump 140 water 145 is ejected to the steel pipe in the shape of an square "Y" 141. The "Y" pipe 141 has two inputs one for each submersible pump 140a , and 140b and a single output 129 to the manifold 123.

The outlet manifold 123 has one input and multiple outputs 126 to the flexible pipe 121, which distributes the flow of submersible water pumps to the surface through the flexible pipe 121.

The flexible pipe 121 (fig. 3) consists of , five lines of steel tubes in parallel in the shape of an square "C", which in its extreme has a elbow with quick coupler which in allows to rotate freely, each interleaved the joint flexible pipe 121 is secured with a clamp 125 to a rectangular profile with two truck-sled 180 one at each end, truck-sled 180 wheel free on the profile "H", allowing to adapt the variation of distance between the platform 170 and the emerging outlet or hub 122 , the emerging outlet 122 is composed of multiple entries one for each flexible pipe 121 entries, concentrate the flow to a single output to the steel pipe 172 and into a steel die 70 that are spliced to the AIR system 20 that feeds the Pelton turbine.

The truck-sled 180 (fig.6a) consists of a single piece of steel, with cuts on the upper deck for location of brakes 184 and anchor bolts has four pieces welded at each end in the shape of a "J" 190The lower flange 190 maintains the truck circulating in the profile structure "H" 128, prevents its output and maintaining free the longitudinal movement in the direction of profile "H" 128, to reduce friction in displacing two rows of three wheels 186 where incorporated in lines which roll on the top side of the structural profile "H" 128, in the bottom of the flange it has a smaller wheel 185, runs from the opposite side of the upper face of the structural profile, "H" 128.

The truck-sled brake 184 is composed of three elements, the anchoring tab 183, ellipsoidal 187 and retracting spring 188, the anchoring tab 183 causes torque in its upper part by a rod 181, has a pendular swing (fig.6c), flange 183 is introduced into slot 127 of the structural profile "H" 128 locking the structure; Retractable spring 188 keeps anchoring tabs closed, the brake is released by rotating the ellipsoidal 187 (Fig. 6b) that pushes outward flange 183 freeing the truck-sled 180.

AIR system 20 (Figure 8) consists of an inlet of the steel matrix 70 distributes hydraulic fluid flow in a steel pipe semi bow shape 232, over the side emerge multiple outputs 231, which transfer the flow to the nozzles that move the vanes 222 of Pelton turbine 220 the water output flow is returned to the sea by the outlet pipe 210.

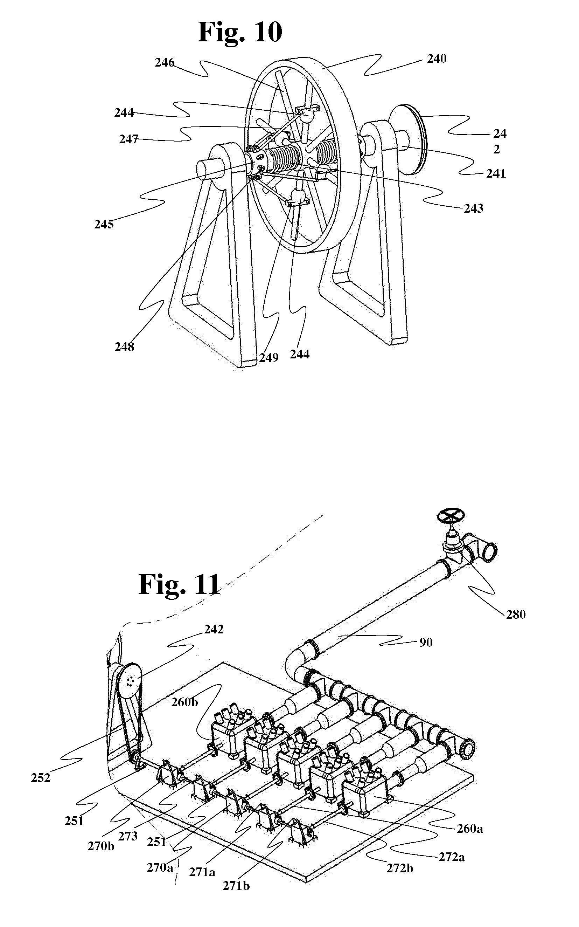

The rotation of axis 223 (Fig. 10) of the of Pelton turbine 220 drives a flywheel 240, the flywheel 240, having steel balls 244 in the rays 246, the steel ball 244 has a bushing which allows moving from the center to the edge of the flywheel 240 by the centrifugal force, the balls are displaced towards the center by the connecting rod 247, the rod is attached to a bracket 248, the bracket 248 is fixed to a bush 245 on the axis 241 of the flywheel 240, the bush 245 is pushed out by a spring 243 , the purpose of the mechanism is to reduce the inertia in the starting of the rotation improving the acceleration, increasing the weight on the ends and allowing conserve the rotation.

The flywheel shaft 241 has a pulley 242 (Fig. 11) on its end, the pulley 242 transmits the rotating through a belt 252 to the crankshaft 251 or transmission shaft is connected to the first reduction gear 270.

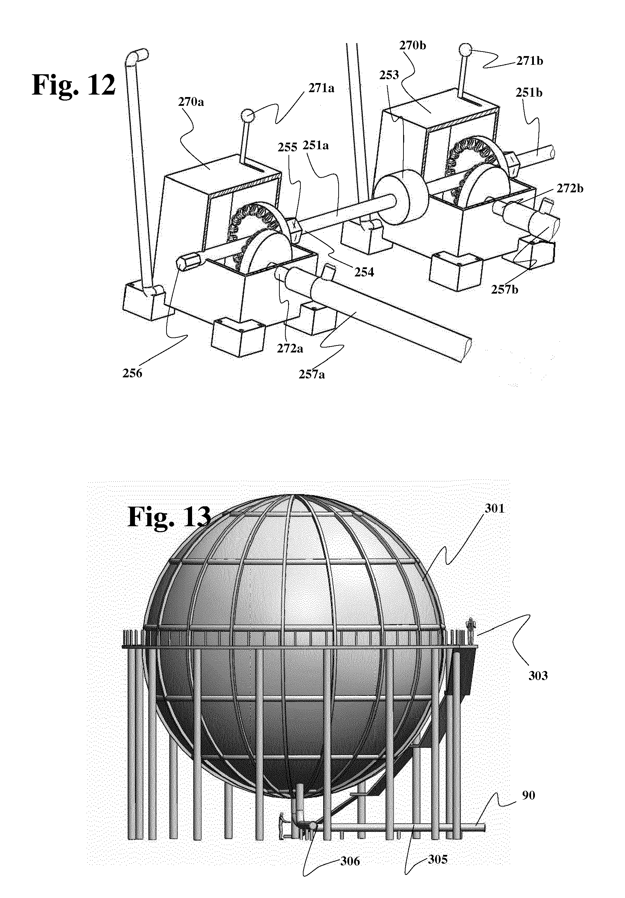

The gearbox 270 (Fig. 12) has a front output 272 which moves the axis the air compressor 260 and has an internal transmission axis with male terminals 256 and female terminals 255 on either side of the gearbox, the drive shaft 251 with a female hexagonal socket head 253, is spliced to the axis 256 out box, besides the drive shaft 251 has a male hexagonal head 254 is spliced to the inlet female hexagonal shaft 255 from the housing to the transmission shaft 270.

The gearbox has a clutch lever 271, enable to get in and get out of operation the air compressor 260, depending on the hydraulic flow of the WAVE system 10.

The output (Fig. 11) of the high pressure air compressors 260 are spliced with Pneumatic steel pipes 90, on each output of the AIR system 20 a safety valve 280 was incorporated and reflow.

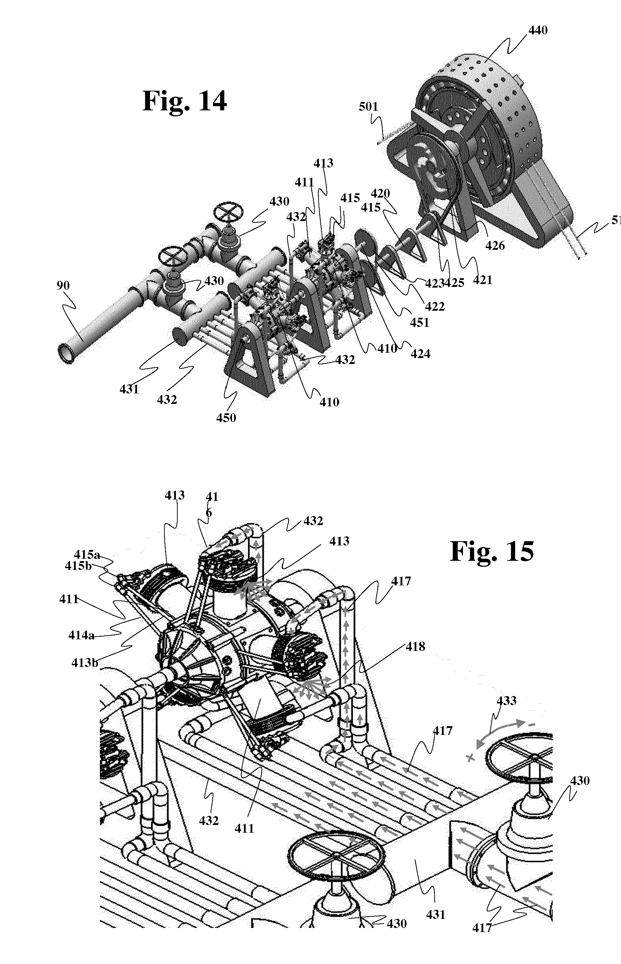

Pneumatic steel pipes 90 (fig. 13) are connected to the input 305 of the storage in hyperbaric large volume tanks 301 , the workflow is evacuated through the outlet 306, air from the hyperbaric tank 301 is distributed through pneumatic steel pipe 90, this pipeline distributes (fig. 14) the flow of work to each motor-generator 40, is spliced to a retention valve 430 for each pneumatic motor 410 and controls the flow, the power and the speed of pneumatic motor 410. At the end of the retention valve 430 distributor 431, was installed which has a single input and multiple outputs, its function is to drive the compressed air 417 (fig. 15) individually to the pistons by means of steel pipe 432.

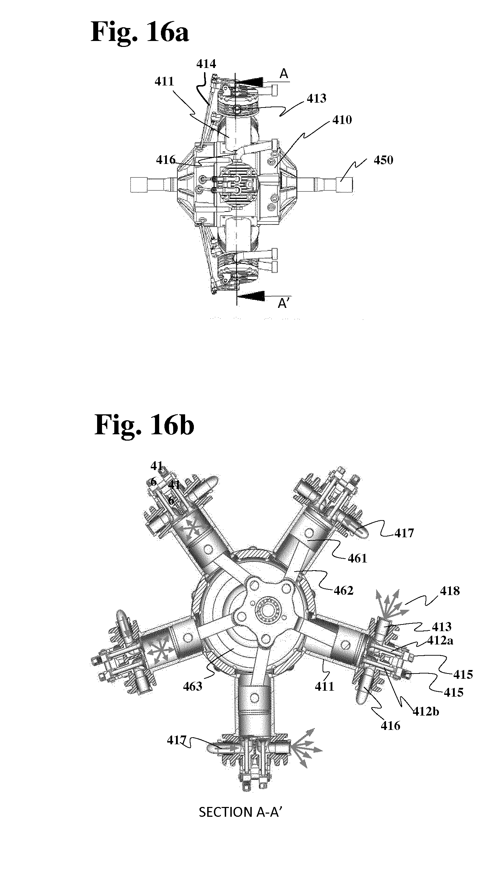

MOTOR-GENERATOR 40 (fig. 14), is composed of three groups of systems, the compressed air motor 410, gear box 420 and the electric magnets generator 440. The compressed air motor 410 is a conventional radial internal combustion engine four stroke, modified to operate with compressed air (Fig. 16b), the changes are reducing cycle from four to two stroke, a filling time and the second of drain, for that the cam disk was modified, which opens and closes valves 412 by the rockers 415The two original exhaust valves, is intended an inlet valve 412b and one outlet valve 412a, the diameters of the inlet ducts 416 and output 413 were amplified; Workflow 417 (fig. 15 and fig 16b.) or compressed air is distributed to each cylinder 411 by pipes 432 to the inlet of the piston 416, the valve opens 412b, workflow entering to the piston chamber, moves the piston 461 to the end of his career, connecting rod 462 rotates the crankshaft 463 and in turn the drive shaft of the pneumatic motor 450. At the time two of the motor outlet valve 412a is opened, the compressed air is released 418 through the exhaust 413.

On the end of transmission shaft 451 (Fig. 14) has a a pulley 423 that rotates the input pulley 424 of the gear box 420 by a drive belt 422, the output of the gear through a pulley 425 a transmission belt 421, rotates the pulley 426 and the shaft of the magneto generator 440, the rotation generates electric power 4 which is evacuated by conductive wires 511 (Fig. 2) to the inverters and power house.

### APPLICATION

The present invention utilizes the breaking waves, surf Fig. 4a, by its deformation and inclination of the surf waves, and the collapse of its upper portion unable to complete the wave, the wave incorporates a horizontal scroll waves translation 86 as a water block with a speed of 30 km / h with a density 1.3 is 1,300 times denser than air, the difference with depth waves is that they have a circular swing, getting only vertical movements.

By using the waves kinetic energy we get the following benefits: clean, green, sustainable and renewable energy; Its modular application would allow to extend the power of increasing energy generation increasing the WAVE systems 10 and increasing the size of the accumulators 40 and MOTOR- GENERATOR system 40, i.e, it has modular property.

A secondary application is to use this same method in run-of-river small hydropower stations using potential hydraulic energy, to generate pneumatic energy allowing to generate bigger electricity power potential.

### THE PRESENT INVENTION OPERATES AS FOLLOWS

The WAVE system 10 (Fig. 2) is submerged and anchored to the seabed 84, the truck-sled 180 enables movement of the platform 170, to match tidal variations, because buoy 157 must be partially submerged for the water body 86 strikes the buoy 157, the stroke rotates the pendular buoy 150 which makes torque on shaft 171, by the difference in length between the half wheel 151 and buoy 157 from shaft 171, multiplies the momentum.

The pendular buoy has a normal vertical rest position by the weight of the semi gearwheel 151 and the buoyancy of the buoy 151, the maximum arc of the trajectory is given from the "PA" 155 to the "PB" 154, fig. 4a shows the typical trajectory 152.

The WAVE system 10 pumps water, its volume is transported to the surface by the flexible pipe 121 and for the matrix to the of Pelton turbine of the AIR system 20, the turbine shaft transmits its mechanical force to the gearboxes and in turn to the axes 273 of the high pressure air compressors 270, the compressed air is stored in the large capacity hyperbaric tanks 301, is important for the tanks to be of large dimensions to extend the operation of the pneumatic motors 410, to exploit the elastic property of air, the compressed air is controllably released through a retention valve 430 which controls the flow 417 (fig. 15) the air flow is directly proportional to the speed and power of the air motor 410; The power of 410 air motors rotate the electric generators magnet 440, generating electric power.

## Claims

1. Electric power generator system starting from wave energy, , wherein a partially submerged pendulum buoy 150, mounted on a movable platform 170 which is fixed to a truck-sled 180 to move freely through "H" profiles rails, to adjust to fluctuations in tide height; pendular buoy 150 moves a external gear 133, of a pressurized house 130, the axis of the external gear and an internal gear are connected by a unidirectional bearing 135, the internal gear 130 moves a flywheel 131 along the inner face and the side face where it has a gearing; the flywheel shaft 138 drives a submersible water pump 140, water pump is spliced to a steel distributor 123 having five outputs, each output is spliced to a flexible pipe 121, to bring out the flow of sea water to the coastal border; the flexible pipe 121 are spliced to a hub 122, which drives the hydraulic fluid flow in a steel die 70, toward a Pelton turbine 220 the turbine shaft drives a flywheel 240 with variable weights 244, the flywheel shaft rotates a transmission shaft 251, which splices serially, multiple reduction box 270, for each reduction box is spliced an air compressor of high pressure 260, the compressors working in parallel, the air outlets of the compressors are spliced to a steel pipe 90 which in turn is spliced to a large volume hyperbaric tanks 301, to store energy; the output of the hyperbaric chamber is spliced to a restriction valve 410, in turn is spliced to pneumatic motors 410, the transmission shaft of the pneumatic motors 410 is spliced to a gear box 420 which in turn is spliced to generators 440.

2. Electric power generator system according to claim 1 wherein the pendular buoy 150 is composed of a buoy of hollow cylinder elliptical shape 157, with a wide of more than three meters length, at each end has two welded round profiles, to its opposite end for each round profile has two semi gearwheel 151 to transmit mechanical energy to the flywheel 131 of the pressurized housing 130.

3. Electric power generator system according to claim 1 wherein the pendular buoy 150 is composed of an impact palette (Fig. 4b, 4c) composed of a concave steel plate 159 that its base grouped individual midsize floats 158 by the converse face of the steel plate 159, the structure (Fig. 4b) has two hollow columns that are coupled to the pillars of the crown 151, that transmit mechanical power to the flywheel 131 of the pressurized housing 130.

4. Electric power generator system according to claim 1 wherein the flywheel 240 includes steel balls 244, the flywheel 240 has several steel balls 244 one at each ray 246, the steel ball 224 has a bushing that allows travel from the center to the edge of the flywheel 240, the rod is attached to a bracket 248, the bracket 248 is fixed to a bushing 245 on the shaft 241 of the flywheel 241, the bushing 245 is pushed by a spring 243 outwardly, the purpose of the mechanism is to reduce the inertia in the starting rotation improving acceleration and increases the weight on the ends which allows extending the rotation
